# EUROPEAN PATENT APPLICATION

(11) **EP 3 503 477 A1**
(43) Date of publication of application: **26.06.2019**
(21) Application number: 17210237.8
(22) Date of filing: 22.12.2017
(51) Int. Cl.: H04L 12/40, H04L 29/12, H05B 37/02

(54) **SYSTEM AND METHOD FOR DETERMINING THE POSITION OF NODES IN A TWO-WIRE BUS SYSTEM**

(71) Applicant: ICRealisations BVBA, 3290 Diest (BE)
(72) Inventor: Maurissens, Daniel August Julien Louis, 1350 Orbe (CH); Watt, Trevor Forrester, 3290 Diest (BE)
(74) Representative: De Clercq & Partners

(57) **Abstract**

The present invention relates to a two-wire electrical system comprising at least one controller connected to a plurality of nodes. Methods for determining the electrical positions of nodes connected to the two-wire electrical system are provided. Additionally, a system for performing said methods is provided.

## Description

### FIELD OF THE INVENTION

The present invention relates to a two-wire electrical system comprising at least one controller connected to a plurality of nodes. Methods for determining the electrical positions of nodes connected to the two-wire electrical system are provided. Additionally, a system for performing said methods is provided.

### BACKGROUND

Two-wire electrical bus systems are widely used for installation and cabling of actuators or input output/output devices in structures. A typical two-wire bus system comprises at least one controller, commonly called a master, and at least one node, also referred to as a slave.
For many applications exact knowledge of a node's position in the bus system is essential to performing the system's tasks. For simple networks consisting of only a few nodes this can be an easily handled by listing each node's position in a log file (e.g. a table with node positions). However, as the complexity of a network grows so does its electrical wiring. Tracking each node's position and (inter)connections in a complex system becomes a difficult, time-consuming and error-prone task.
To add to the difficulty the system may require maintenance; for instance when replacing defective nodes or disconnecting obsolete nodes. However, correctly identifying the position of a node and subsequently keeping track of each change in the log file makes maintenance of the bus systems very unreliable and cumbersome.
State of the art two-wire bus systems require communication to each node in isolation so that a master internal node table may be constructed which contains all of the node IDs and their corresponding (electrical) positions. In other words, by electrically tagging each node their corresponding node ID can be registered to a layout position prior to connection to the system's bus line.
The master internal node table allows the master to know the position and ID of each node in the completed system. The registration of these nodes can be performed manually by labelling of the nodes. Each device is provided with a coded label that contains one or more electrical IDs. Accordingly, the coded labels can be scanned whenever a node is connected to the system. However, this is a laborious and time-consuming process and in case of an error (e.g. wrong scan) there is no way for easily determining the location of the error.
Alternatively, the registration procedure can be done electrically by sequentially connecting each node (i.e. one by one in turn) to an electronic reading device. The position of the scanned or read ID will be related to the position of that node as specified on the physical layout of the two-wire system. This method of connecting nodes is typically performed using a plan, which graphically represents the physical layout of the two-wire bus network. However, this method may often prove unreliable and the electronic reading device may fail. Moreover, changing the plan or the layout can be very inflexible, at times requiring a great deal of effort to either correct present mistakes in the plan or make changes to the layout after initial setup.
Another option is to introduce a sensing element into the bus system after set-up. However, connecting an external element necessitates an interruption of the wires to allow for insertion of said element into the system. Any physical contact with the wires, whether it is via cutting or another invasive technique, decreases the reliability of the system and creates a risk for bad contacts.
Consequently, the alternative methods still require isolated communication to each node and/or rely heavily on the technician in the field connecting the node in the correct position.
In view of the above, there is a need for systems and methods for determining the positions of nodes in a fast and cost efficient way, which are preferably less difficult and laborious; and preferably also reduce or altogether prevent the occurrence of (system and human) errors.

### SUMMARY OF THE INVENTION

The devices and methods according to the present disclosure solve the aforementioned problems. Accordingly, provided herein are systems and methods for determining the electrical positions of nodes connected to the two-wire electrical system.
An aspect of the invention provides a method for determining the electrical positions of nodes in a two-wire electrical system, the system comprising at least one controller connected to a plurality of nodes, every node comprising a unique ID, the method comprising:
a) addressing a first node with a unique addressing signal;
b) instructing the first node to sink or source a positioning current - thus becoming a sinking/sourcing node;
c) addressing a group of nodes with a global addressing signal;
d) instructing the group of nodes to register the positioning current of the sinking/sourcing node;
e) optionally, instructing the sinking/sourcing node to release the positioning current sinking or sourcing;
f) instructing the group of nodes to report the registered positioning current;
g) determining the electrical position of the first node relative to every node in the group of nodes;
h) optionally repeating steps a) to g) for one or more, and preferably every, node of the plurality of nodes; and,
i) compiling a table of electrical positions, preferably listing the relative and/or physical position of every node of the plurality of nodes.
In some preferred embodiments every node comprises a current sinking and/or sourcing device configured for sinking or sourcing of the positioning current, preferably comprising a transistor; and wherein the current sinking or sourcing of step b) is performed by means of the current sinking or sourcing device of the first node.
In some preferred embodiments every node comprises a current sensing device configured for sensing the positioning current of the sinking/sourcing node, preferably comprising a Hall sensor, a current transformer, and/or a pick-up coil; and wherein the registering of step d) is performed by means of the current sensing devices of every node in the group of nodes.
In some preferred embodiments wherein step a) is addressing unique multiple nodes with multiple unique addressing signals, such as a first node with a first unique addressing signal, a second node with a second unique addressing signal, a third node with a third unique addressing signal, and so on; and wherein step b) is instructing the multiple unique nodes with multiple unique addressing signals to sink or source a unique positioning current - thus becoming a first sinking/sourcing node, a second sinking/sourcing node, a third sinking/sourcing node, and so on.
In some preferred embodiments the positioning current is coded by means of variation in amplitude, and/or frequency, and/or analogue or digital coding; preferably resulting from a time interleave between the positioning and addressing current, and/or a current and/or voltage modulation corresponding for both the controller and the plurality of nodes.
In some preferred embodiments the method further comprises the steps of:
x1) addressing and instructing a return signal to every node of the plurality of nodes;
x2) verifying the presence and unique ID of every node in the table of electrical positions;
x3) identifying new and/or modified nodes;
x4) determining the electrical positions of the new and/or modified nodes according to the method of any one of claims 1 to 5;
X5) updating the table of electrical positions.
In some preferred embodiments the method further comprises the steps of:
y1) providing a list of installed nodes;
y2) comparing the list of installed nodes with the nodes in the table of electrical positions; and,
y3) determining any differences in the comparing of step y2.
In some preferred embodiments wherein the steps of (y1) to (y3) are initiated whenever a node is added, removed, replaced and/or rearranged; preferably automatically repeated.
In some preferred embodiments wherein in case of a new node the method further comprises determining an electrical position of the new node; or wherein in case of a missing node the method further comprises flagging the missing node as a defective node; preferably reporting the missing node.
In some preferred embodiments the controller acquires and/or assigns a unique ID from and/or to every node; preferably by means of a binary search algorithm, a breadth-first search algorithm, a depth-first search algorithm, or a combination thereof.

An aspect of the invention provides a two-wire electrical system, the system comprising:
- at least one controller;
- a plurality of nodes connected to the controller;
characterised in that each node comprises:
- a current sinking and/or sourcing device configured for sinking or sourcing of a positioning current;
- a current sensing device configured for observing the sinking or sourcing of the positioning current in nodes.
In some preferred embodiments the current sinking and/or sourcing device comprises a device configured for creating a current flow through the node; preferably a transistor in the case of sinking and a power source and a transistor in the case of sourcing.
In some preferred embodiments the current sensing device comprises a device configured for detecting the magnetic field generated by the positioning current; preferably a magnetic sensor, such as Hall sensor, and/or a current transformer, and/or a pick-up coil.
In some preferred embodiments the controller is configured for performing the method according to an embodiment as described herein.

An aspect of the invention provides a use of the system according to an embodiment as described herein for performing the method according to an embodiment as described herein; preferably for mining, automotive, automation and machine construction; telecom; data collection.

### BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.

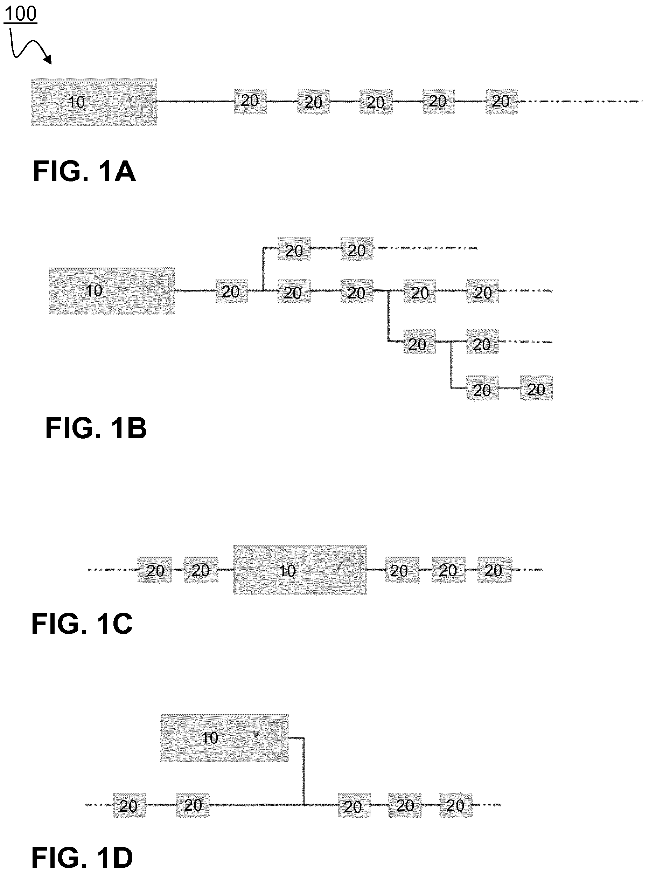

**Figure 1A** illustrates a schematic of a single string layout.
**Figure 1** **B** illustrates a schematic of a tree structure layout.
**Figure 1C** illustrates a schematic of a multi string layout.
**Figure 1** **D** illustrates a schematic of a tree structure layout.
**Figure 2A** shows a schematic of a system (100) for determining the positions of nodes in the two-wire electrical system.
**Figure 2B** shows a detailed schematic of the system (100). Example 2 provides further information on figures 2A and 2B.
**Figure 3** shows an exemplary flowchart for performing a preferred embodiment of the method for determining the positions of nodes in a two-wire electrical system. Example 3 details an exemplary implementation of said flow-chart.

### DETAILED DESCRIPTION

The present invention will be described with respect to particular embodiments but the invention is not limited thereto but only by the claims. Any reference signs in the claims shall not be construed as limiting the scope thereof.
As used herein, the singular forms "a", "an", and "the" include both singular and plural referents unless the context clearly dictates otherwise.
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps.
Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.
The term "about" as used herein when referring to a measurable value such as a parameter, an amount, a temporal duration, and the like, is meant to encompass variations of +/-10% or less, preferably +/-5% or less, more preferably +/-1 % or less, and still more preferably +/-0.1 % or less of and from the specified value, insofar such variations are appropriate to perform in the disclosed invention. It is to be understood that the value to which the modifier "about" refers is itself also specifically, and preferably, disclosed.
The recitation of numerical ranges by endpoints includes all numbers and fractions subsumed within the respective ranges, as well as the recited endpoints.
All documents cited in the present specification are hereby incorporated by reference in their entirety.
Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.
Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In one or more aspects, the present invention relates to a two-wire electrical system, also referred to as a bus, comprising at least one controller connected to a plurality of nodes; and to methods for determining the positions of nodes in the two-wire electrical system are provided.
Generally speaking, the present invention may provide for a highly effective, fast, cost and/or energy-efficient system for determining the positions of nodes in the two-wire electrical system (i.e. bus wire). The present invention may also improve the user-friendliness and reduce the chance of (human or system) errors by enumerating (i.e. automatically detecting) of a node's ID and its corresponding position in the bus wire. The present invention may also improve the flexibility of the system by allowing nodes to be connected the bus-wire at any place at any time whilst the bus-wire is powered or unpowered. The present invention may also improve the reliability of the system by reducing or preferably altogether preventing invasive interaction with the system, such as cutting of the wires and tagging of the nodes. The present invention may also improve the resource cost of the system by reducing or preferably altogether eliminating the need for external elements (e.g. sensors, resistors) to be inserted and/or coupled into the bus. The present invention may also decrease the labour intensity of the system by reducing the workload of technicians operating the system and/or performing maintenance in the field. The present invention may also improve the efficiency of the system by allowing more nodes to be incorporated over single or multiple wire lengths.

Controller/node or alternatively master/slave is a model of communication between devices wherein at least one device is being configured to act as a controller (or master) has control over at least one other device configured as node (or slave). In some electrical systems a master is selected from a group of eligible devices, with the other devices acting in the role of slaves. The devices (i.e. controllers and nodes) typically comprise one or more means for performing certain tasks, said means depending on their purpose and role in said system (e.g. a sensor, actuator, etc.), and a control unit for controlling the one or more means.

Accordingly, the controller may be a pre-selected programmable device that is configured for carrying out an instruction or command, or a list of instructions or commands. Additionally or alternatively, any node from the plurality of nodes may be configured to act as or take over the role of the controller.
While typically only a single device is configured to act as master, other devices may be configured to take over the role of a master, allowing for more flexibility to change which device is controlling should a master be removed or malfunction. An additional advantage of having multiple masters on the bus is that the method according to an embodiment as described herein could be carried out faster than with a single controller. However, the presence of multiple controllers may require anti-collision functionality to prevent the occurrence of conflicting commands. In particular, the collision of commands from multiple masters is preferably prevented to the same node(s), more preferably on the same segment or string of the bus, most preferably (altogether) avoided in the bus. The collision of commands can be prevented using methods known in the art, for example by assigning a time schedule which dictates when a master can instruct and when it should stay silent. When (electrically) activated the controller and nodes present in the electrical system will typically start transferring current from the controller downstream towards the most distant node (relative to the controller), and subsequently upstream back to the controller. Accordingly, the term "downstream" as used herein indicates that a device (e.g. a first node) is located in the wiring graph of the system further away from the master compared to a reference device (e.g. a second node). Similarly, "upstream" indicates that a device is located closer to the master than the reference device.
The "two-wire electrical system" as used herein refers to a functional two-wire system. In other words, the bus system may comprise a number of (electrically conducting) wires greater than two, for example three wires, four wires, five wires, etc., which additional wires are not functional in the sense that they do not contribute to performing the method according to an embodiment as described herein. For instance, the additional wire(s) may be configured for performing a separate process, or alternatively serve as back-up wires for maintenance purposes.

In a typical controller/node set-up a controller may issue different signals directed towards the nodes it is connected to. The term "signal" as used herein refers to any message sent over the network from a master to a node or from the node to the master. The signal may be AC and/or DC; each current flow having advantages and disadvantages known to those skilled in the art. The signal may be coded using voltage and/or current modulation techniques known in the art or combinations thereof; such as amplitude modulation, frequency modulation, phase modulation, and the like.
Broadly speaking two types of signals are distinguished within the context of the present invention: Firstly the controller may send out an addressing signal, which allows the controller to selectively or non-selectively connect to and/or activate devices. The addressing signal may subsequently be followed by a command signal, which is an instruction preferably to be executed only by the addressed device(s).
With regards to addressing signals, the controller may attempt to address either a single or multitude of nodes:
- "Unique addressing signal": with this signal the controller will attempt to address a single node amongst the plurality of nodes. The unique addressing signal is preferably based on the unique ID of the addressed node; or another unique distinguishing feature of said node. The addressed node need not necessarily be present in the bus system. Accordingly, the addressing signal may also serve as a means to verify the node's presence or absence (e.g. defect, error).
- "Global addressing signal": with this signal the controller will attempt to address a multitude of nodes from the plurality of nodes. The controller may attempt to fully address all the present nodes, for example ten out of ten nodes, or it may also selectively address a group of nodes, for example, five nodes out of the total of ten nodes. The 'full selection' may be based on a selection of every unique node's ID, but preferably it will disregard any IDs present allowing for a faster and less complex communication model. The 'partial selection' is preferably based on common ID features present amongst the selected group of nodes. For example, the controller may address all nodes comprising an ID wherein the ID's first bit equals 1; alternatively, the controller may address all nodes comprising an ID wherein the ID's first bit equals 1, the fifth bit equals 0, and the final bit equals 1.
With regards to command signals, the controller may issue the following commands to the addressed node(s):
- "Execution of a return signal": this command instructs the addressed node(s), if present, to reply to at least one controller with a "return signal". Accordingly, the return signal allows said controller to confirm and register the node(s) presence or absence in the bus system.
- "Sinking or sourcing of the positioning current": this command instructs the addressed node(s) to start sinking or sourcing a current. Preferably the sinking or sourcing is performed by means of current sinking/sourcing device(s). A node that starts sinking or sourcing a current is also referred to as a "sinking/sourcing node". The sinking or sourcing current by a sinking/sourcing node is referred to as the positioning current. It should be noted that in the context of the present invention sinking and sourcing are regarded as mutually exclusive alternatives, meaning that both sinking as well as sourcing can be used in the methods and devices described herein. In this respect a positioning current can either be a sinking positioning current or a sourcing positioning current and a node can either act as a sinking node or a sourcing node. It should however be noted that each node can comprise a sinking device, a sourcing device or both, enabling the node to become either a sinking node or a sourcing node.
- "Registration of the positioning current": this command instructs the addressed node(s) to register if the positioning current (i.e. sinking current by a sinking node or a sourcing current by a sourcing node) has been observed. Preferably the observation is performed by means of current sensing device(s). Preferably the registration is stored by means of memory unit(s). Additionally, the nature of the observed sinking or sourcing current may also be registered (e.g. amplitude, frequency, modulation method, etc.).
- "Reporting of a positioning current": this command instructs the addressed node(s) to report to the controller if a positioning current has been observed and registered. Additionally, the nodes may also report the nature of the registered sinking or sourcing current.

In a first aspect, the present invention relates to a method for determining the electrical positions of nodes in a two-wire electrical system, the system comprising at least one controller connected to a plurality of nodes, every node comprising a unique ID, the method comprising:
a) addressing a first node with a first unique addressing signal;
b) instructing the first node to sink or source a positioning current - thus becoming a sinking/sourcing node;
c) addressing a group of nodes with a global addressing signal;
d) instructing the group of nodes to register the positioning current of the sinking/sourcing node;
e) optionally, instructing the sinking/sourcing node to release the positioning current sinking or sourcing;
e) instructing the group of nodes to report the registered positioning current;
f) determining the electrical position of the first node relative to every node in the group of nodes;
g) optionally repeating steps a) to f) for one or more, and preferably every, node of the plurality of nodes; and,
h) compiling a table of electrical positions, the table preferably listing the electrical position of every node of the plurality of nodes.

In a generalised embodiment the electrical positions of the nodes are unknown or the positioning of nodes has been modified (e.g. maintenance). Starting the "electrical positioning method" at least one controller instructs each node in turn to start the "Sinking or sourcing of a positioning current" command, whilst the other nodes are instructed to start the "Registration of the positioning current" command. The registered positioning current may then be reported back to the controller following a "Reporting of the positioning current" command, which enables the controller to infer the electrical position of the sinking/sourcing node based on the reported presence or absence of a sinking/sourcing current.
The selection of the sinking or sourcing mode may be performed systematically or randomly by the controller. For example, a random unique ID may be selected from all of the ID's of every node connected and available on the bus system. To decrease the search time for establishing the topology of the system and for determining the positioning of all nodes, the selection can be further optimised using methods known in the art (e.g. feedback loops that allow for improved sequencing of the sinking/sourcing nodes).
The method will preferably continue until multiple, and preferably every, node of the plurality of nodes connected to the system has been a sinking/sourcing node. The completion of the method may be automatically detected by the controller.
Once the controller has received information from all the reporting nodes, the electrical position of every node can be determined relative to every other node present in the bus system. Alternatively, the controller may also create a temporary table which is updated whenever newly registered positioning currents are reported to the controller.

The master may store the position in a table, preferably listing the nodes with their unique ID and their relative electrical positions. The table may be a result of multiple temporary entries (e.g. for each node in sequence), or may be the combination of multiple tables (e.g. for each branching sequence).

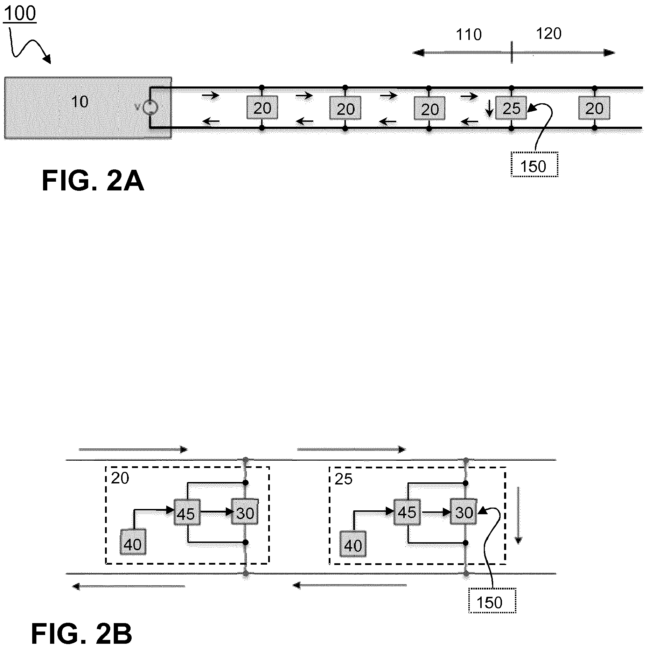

Moreover, by incorporating physical parameters (e.g. system set-up, wiring, branching) into the table of electrical positions, the controller may also determine the physical position of every node of the plurality of nodes. For instance, the physical position of the nodes may be inferred by comparing the obtained relative electrical position with the specific layout (e.g. in estimated or absolute distances) of the system. The physical positions may be determined by a third device, either directly connected to the controller, or separate but having access to the table of electrical positions.
The table may be for instance stored on a memory unit comprised in the controller, and/or it may be stored externally on a third device. There exist various memory units; each having their own benefits familiar to those skilled in the art.
To better illustrate the method reference is made to an exemplary single string layout (see Fig 2A), which comprises five nodes connected in series. The fourth node downstream will be instructed to start sinking or sourcing the positioning current. Consequently, the three nodes located upstream relative to the sinking/sourcing node will observe and register the positioning current; however, the one node located downstream relative to the sinking/sourcing node will not observe the positioning current and will thus also fail to register having observed said positioning current. After reporting back to the controller, the controller can be configured to deduct that the sinking/sourcing node has a relative electrical position as fourth node in the bus wire system comprising a total of five nodes.
Although the exemplary method describes a single string layout, the method may be performed on a bus wire with varying complexity, regardless of the structure and branching of the network, or the amount of nodes connected to the bus wire.
Optionally, after completion of the "Registration of the positioning current" command the sinking/sourcing node may stop its "Sinking or sourcing of the positon current". The continuous sinking or sourcing of positioning current may make the communication on the bus wire and position discovery of the other nodes more difficult (e.g. interference). However, it may also be continued if it serves a specific purpose, or alternatively, the stopping command may also be postponed to a later step of the method.
In some embodiments the method comprises a single controller connected to a plurality of nodes. The presence of multiple simultaneously active controllers on a single bus may cause difficulties of arbitration between the multiple controllers.
The controllers are preferably configured not to instruct simultaneously, thus the benefits (e.g. time gain) are limited whereas the complexity of the system increases significantly.

However, as indicated above different nodes may take over the role of a single controller depending on the situation and timing.
In some embodiments the method comprises determining the electrical position of multiple nodes simultaneously. In particular, wherein step a) is addressing unique multiple nodes with multiple unique addressing signals, such as a first node with a first unique addressing signal, a second node with a second unique addressing signal, a third node with a third unique addressing signal, and so on; and wherein step b) is instructing the multiple unique nodes with multiple unique addressing signals to sink or source a unique positioning current - thus becoming a first sinking/sourcing node, a second sinking/sourcing node, a third sinking/sourcing node, and so on.
Several nodes may be asked to sink or source a positioning current simultaneously or in very short time intervals provided each node may be configured to distinguish the unique addressing signals and unique positioning currents. The unique positioning may be achieved by changing the nature of the current; for example by using different frequencies (AC) or modulations types. This may allow for a faster and more efficient performing of the method, although at the cost of increased complexity.

In the present method every node already comprises a unique ID. The unique ID may be a number of identifications bits stored on the node. The unique ID may be assigned during node manufacturing, or alternatively a unique ID may be acquired and/or assigned when the node is connected to the bus system by instructing the controller to initiate an (automatic) enumeration process when detecting devices on the bus.
There exist many methods in the art for acquiring and/or assigning unique IDs to nodes based on sequential, selective or randomized methods. Once all nodes have been assigned IDs, the subsequent process of acquiring the IDs by the controller can be started. For example, methods that may be considered suitable the purposes of the present invention are the binary tree search method, the breadth-first search algorithm, the depth-first search algorithm, and the like.
On how a depth-first search algorithm could work the following example is provided. Using a global addressing signal, the controller may address nodes with specific ID bit combinations, which may then be followed by a dedicated command for silencing all the nodes with said specific ID bit combinations. Accordingly, a silencing bit may be registered in the addressed and silenced nodes. Afterwards the controller can perform an ID search: only the devices that having said silencing bit not set will reply to the ID search command. Hence the controller may incrementally find the ID's of the additional nodes on the line and the master can also set their identification bit, once the unique ID bit combination is found. The controller may backtrack the silenced nodes and resolve their unique IDs. Afterwards the system may be released for further communication. However, if nodes may simultaneously respond to the controller, for instance because their return signals are sufficiently distinguishable by the controller, it may not be necessary to sequentially silence the multitude of nodes.
Intermittence in the network (i.e. removal of nodes in the network) may reduce the functionality of the system. However, it may be detected in the following ways:
Nodes can keep their identification bit high as long as the slave node observes a voltage on the line indicating that the line is connected to the controller, otherwise the node may reset this bit. When the node reconnects to the system, the controller can easily detect that intermittence has occurred.
Alternatively the controller may issue a global addressing signal followed by a command instructing all devices that have that specific identification bit set to stay silent. The master can then check if any device will reply to an ID search command. If there are replying nodes that have ID's that were present in the list of existing devices, the controller may conclude that there was intermittence. If the controller finds devices with ID's not previously listed it may have found new devices that have now been added to the network.
Accordingly, once every node's unique ID is known by the controller the electrical positions of nodes may be determined using the present method.

The positioning current is preferably clearly and distinctly distinguishable from the addressing- and commands signals for avoiding confusion and/or malfunction of the system. As described above, there exist multiple methods in the art for ensuring appropriate distinction; preferably by means of signal coding.
In some embodiments the positioning current is coded between the controller and nodes by means of variation in amplitude and/or frequency, and/or analogue or digital coding, and/or a current and/or voltage modulation, and/or a combination thereof.
The signals that are created by the controllers and nodes on the bus may depend on the type of modulation the nodes put on the bus. As discussed above, it can be either a current modulation or a voltage modulation, or a combination of both, to name some of the simple forms of the modulation. More complex modulation schemes may be used which apply one or more subcarriers; for example ASK, FSK or PSK. Preferably the modulation is orthogonal (in the mathematical sense) to the modulation used for the positioning current.
In some preferred embodiments the positioning current is distinguished by means of a time interleave between the positioning and addressing/command signals corresponding to both the controller and the plurality of nodes. The time interleave may refer to the controller alternating communication between the sinking/sourcing node and the group of nodes. For example, during observation of positioning current the sinking/sourcing node(s) may be consecutively addressed to activate its positioning current and the group of nodes can then refrain from putting any additional signals on the line.
In some embodiments wherein the nodes receive their supply current from the bus wire, the positioning current is preferably distinguishable from the supply current. For instance, current coding by means of modulation can be used, preferably orthogonal modulations. Additionally or alternatively time interleaves can be used; for instance if the supply current is not distinct enough from the positioning current. The nodes can switch off their supply from the bus within the timeframe that the positioning current can happen. In that timeframe the nodes work with a temporary storage of energy for the time taken by signalling current. This storage of energy can be done in a capacitor or taken from a backup battery.

In some embodiments every node comprises a current sinking and/or sourcing device configured for sinking or sourcing of the positioning current and the current sinking or sourcing of step b) is performed by means of the current sinking or sourcing device of the first node. In particular, the current sinking or sourcing device is responsive to a "Sinking or sourcing of the positioning current" command signal from the controller. Preferably the current sinking or sourcing device comprises a device configured for creating a current flow through the node; preferably a transistor in the case of a sinking node and a power source and a transistor in the case of a sourcing node..
In some embodiments every node comprises a current sensing device configured for sensing the positioning current of the sinking/sourcing node; and wherein the registering of step d) is performed by means of the current sensing devices of every node in the group of nodes. In particular, the current sensing device is responsive to a "Registration of positioning current" command signal from the controller.
Preferably the current sensing device comprises a device configured for detecting the magnetic field generated by the positioning current; preferably a magnetic sensor, such as Hall sensor, and/or a current transformer, and/or a pick-up coil. In particular the current sensing device may be any electronic and/or magnetic sensor suitable for picking up and registering sufficient signal to positively identify the presence of the positioning current; and reporting it to the controller. Typically higher magnetic sensitivity to pick up weaker positioning currents requires more supply current in the node. In node supply current sensitive applications the pickup coil can be used which is completely passive not requiring any supply current. This coil can be tuned with a capacitor. This has a number of advantages. The inductance of the pickup coil together with the tuning capacitors provides for a frequency selective pickup. This frequency may then be referred to as the positioning frequency. Only when the current sink or source device generates a positioning current of the specific positioning frequency can it be picked up, for instance by the sinking or sourcing device. Other currents generated in the network may be designed so as not to contain enough energy in the tune frequency band to activate the detection of the positioning current. Secondly, the tuning circuit may amplify the positioning signal with a factor equal to the quality factor of the tuned circuit. This amplification is obtained without using any supply current within the slave node.

In some embodiments the method for determining the electrical position further comprises further steps for updating of the electrical position of nodes, said steps comprising:
x1) addressing and instructing a return signal to every node of the plurality of nodes;
x2) verifying the presence and unique ID of every node in the table of electrical positions;
x3) identifying new and/or modified nodes;
x4) determining the electrical positions of the new and/or modified nodes according to an embodiment of the method as described herein;
x5) updating the table of electrical positions.
The updating steps may serve as a check-up for reducing the presence of errors in the table of electrical positions. Sometimes nodes may be temporarily unreachable, for instance as a result of a bad contact or loss of connection. The check-ups serve to discover nodes that would have otherwise been flagged as defective.
Additionally, the verification steps may also serve to quickly update the table after changes to the bus system. For instance, if defective nodes have been replaced during maintenance; or alternatively if the layout of the system has been modified or expanded (e.g. addition or removal of branches). Accordingly, updating the table of electrical positions may be faster and more efficient than entirely compiling a new table, especially for complex bus systems.

In some embodiments the method for determining the electrical position further comprises further steps for verifying the presence or absence of nodes, said steps comprising:
y1) providing a list of installed nodes;
y2) comparing the list of installed nodes with the nodes in the table of electrical positions; and,
y3) determining any differences in the comparing of step (y2).
In some embodiments the steps of y1) to y3) are initiated whenever a node is added, removed (intermittence), replaced and/or rearranged (e.g. change the physical or electrical ordering in the system); preferably automatically repeated.
The verification steps may primarily serve to reduce the error in the system by ensuring that all node positions were determined correctly and that no nodes are missing. However, it may also improve the replacement or switching of nodes, such as the addition of new node(s) or branches, removal of obsolete nodes, and/or other maintenance related procedures.
Preferably the determining in case of a missing node further comprises the step of flagging of the missing node as a defective node; more preferably reporting the missing node.
Preferably the determining in case of a new node comprises determining an electrical position of the new node; preferably using the method according to an embodiment as described herein; most preferably according to the verification steps.
Additionally or alternatively, in case a new node appears to correspond to an electrical position of a missing node, reporting a replacement of the node.
Preferably the method is repeated automatically when triggered. The trigger may be provided by various sources, such as a maintenance trigger entered manually or automatically by a connecting node, or the trigger could be time based, repeated at routine intervals or whenever the system is idle. This effectively provides for routine check-ups to be performed.
Additionally, the controller may flag and/or report the presence, or rather absence, of any defective or missing nodes. Once the physical re-arrangement is complete the controller may re-enumerate and detect the new slave positions or the master may be programmed to automatically do this in idle time.

The controller may continue from the previously obtained table of electrical positions as a starting point, or it may start from scratch depending on the nature and extent of the change operation. The updated table may be stored alongside the previous table, thus allowing for comparisons and logging of changes. Alternatively, the updated table may replace the previous table saving memory resources. After updating the controller may be able to perform the required operational tasks determined by the nature of the system.

In a further aspect, the present invention relates to two-wire electrical system, the system comprising:
- at least one controller;
- a plurality of nodes connected to the controller;
characterised in that each node comprises:
- a current sinking and/or sourcing device configured for sinking or sourcing of a positioning current; and,
- a current sensing device configured for signalling the presence of current in nodes.
The system provides several advantages over systems of the art. The system does not require any current sensing element to be inserted into the two wire bus, which may improve its reliability. In particular, this means that the bus wire does not have to be cut at the position of the node for inserting said sensing element or to sever the bus into separate segments per node. This is important because every interrupted connection may form a potential source of bad contact. Moreover, the number of interconnection points into the bus can be reduced and the number of nodes or other elements on a line, compared to a conventional system, may be increased.
Additionally, the system's installation speed and user-friendliness may also be improved. Since the bus wires do not require any severing the installation time may be reduced and also the routing of the bus may be simplified.
The controller and nodes may be directly powered from the two-wire bus or may obtain their power from other power sources; for example, an electrical cell. Once the master and all the nodes have been connected to the bus-wire, the controller may automatically start the method for determining the electrical and/or physical positions of the nodes. The controller and nodes may comprise further means for performing the method, such as memory units, computational devices, and other devices that may improve the performing of the method.

In some preferred embodiments the controller is configured for performing the method for determining the electrical position and/or physical position according to one or more embodiments as described herein.

In some embodiments the current sinking or sourcing device comprises a device configured for creating a current flow through the node; preferably a transistor in the case of a sinking node and a power source and a transistor in the case of a sourcing node.. The advantages thereof are discussed above.
In some embodiments the current sensing device comprises a device configured for detecting the magnetic field generated by the positioning current; preferably a magnetic sensor, such as Hall sensor, and/or a current transformer, and/or a pick-up coil. The advantages thereof are discussed above.
In some embodiments the current sinking or sourcing device is positioned downstream of the current sensing device. In some other embodiments the current sinking or sourcing device is positioned upstream of the current sensing device.
In principle the sensing device's position may be located before or after the current sinking or sourcing device. However, the algorithm used to parse the tabulated information and provide the electrical position of each node may need to be aware of this position to allow for correctly determining the electrical positions.
In some embodiments the plurality of nodes are arranged in a single string, a branching structure, or a combination thereof.
The layout of the two-wire bus can either be a single string without any branching or a tree structure whereby each line running away from the master may be split at any point, creating in that way a tree-like structure. In principle any wire position of the controller can be reduced to a simpler tree branch structure. Consequently, the system and/or methods are by no means limited to a particular string and/or branching structure(s).

In a further aspect, the present invention relates to a use of the system method according to one or more embodiments as described herein.
In some embodiments the use is for laying out electronic detonators within a blasting configuration. In the mining industry a hand-held device is used to assign a position to each detonator before they are connected to the two-wire bus.
In some embodiments the use is for collecting data of remote water-, gas- and energy consumption meter. In some embodiments the use is for carrying supply for the remote terminals. In some embodiments the use is for digital addressing signals and voice data in intercoms.
In some embodiments the use is for reading out or controlling a series of devices; preferably sensors and/or actuators. In the automotive industry two wire bus systems are commonly used for sensors or actuators. The system allows for inferring the functionality of the sensors or actuators from the wiring scheme that may be determined and/or fixed by the wiring harness. In factory automation and machine construction industry a plurality of actuators and sensors can be wired to a two wire bus receiving power and signalling over this bus. The bus can extend over one machine or can be spread over an industrial production line.
Other industries also use daisy chaining systems wherein each node is sequentially connected in-turn electrically to the bus. The invention is by no means limited to a particular industry and/or application and the applications listed above serve merely as exemplary applications.

### EXAMPLES

To better illustrate the properties, advantages and features of the present invention some preferred embodiments are disclosed as examples with reference to the enclosed figures. The examples may also present simplified embodiments of the present invention intended for explanatory purposes. Accordingly, the present invention discloses many embodiments and adjustments as appreciated by those skilled in the art and the scope of the present invention is by no means limited to the illustrative examples presented below.

### Example 1

The present example provides a particular embodiment of a two-wire electrical system (100), the system (100) comprising a (single) controller (10) and a plurality of nodes (20), each node connected to the controller. The connections may be direct or indirect. For instance, **figure 1A** illustrates a schematic of a single string layout. The plurality of nodes (20) is arranged as a single string of nodes, every node connected in series starting from the controller (10).
**Figure 1** **B** illustrates a schematic of a tree structure layout. Here a part of the plurality of nodes (20) is arranged in a single string, but the single string also comprises branching structures. The branching structures may in turn comprise additional nodes (20) arranged in single (secondary, tertiary, etc.) strings, or may comprise additional branching structures of their own.
**Figure 1C** illustrates a schematic of a multi string layout. The controller (10) may be regarded as the starting point for a more than one series of strings, each string comprising a plurality of nodes (20).
**Figure 1D** illustrates a schematic of a tree structure layout. The controller (10) may be connected to a junction of wires which branches in turn comprise a plurality of nodes (20).

### Example 2

Reference is made to **figure 2A and figure 2B****,** which illustrates a particular embodiment of a two-wire electrical system (100), the system (100) comprising a single controller (10) connected to a plurality of nodes (20) in a single string layout; every node (20) of the plurality of nodes (20) comprising a current sinking and/or sourcing device (30) and a current sensing device (40). The current direction is symbolically illustrated with the direction of the arrows, which allows for determining the relative node positions with reference to upstream (110) and downstream (120).
In this illustrative embodiment, the fourth node located downstream (120) of the controller is addressed by the controller (10) with a unique addressing signal, which controller (10) subsequently instructs said fourth node to sink or source the positioning current (150); preferably after a "Sinking or sourcing of the positioning current" command. The fourth node thus becomes a sinking/sourcing node (25).
The three nodes (20) located upstream (110) relative to the current sinking/sourcing node (25) can observe the positioning current of the sinking/sourcing node (25). Hence they can positively register the positioning current of the sinking/sourcing node (25); preferably after a "Registration of the positioning current" command. However, the nodes located downstream (120) relative to the sinking/sourcing node (25) will not observe any positioning current passing. Hence they cannot register the positioning current of the sinking/sourcing node (25).
When the controller instructs the nodes (20) to report the registrations of the positioning current; preferably after a "Reporting of a positioning current" command; three nodes may respond positively, whereas the remaining nodes may respond negatively.
In view of the above, the controller may determine that the sinking/sourcing node (25) is at the fourth relative position of the single string network. The nodes located upstream (110) to the sinking/sourcing node (25) may be known to be positions 1 to 3, or their exact position is yet to be determined. Similarly, all nodes that did not observe the sinking or sourcing current of sinking/sourcing node (25) may be known to be in a position of 5 or above. The relative positions may be used to further optimise the present method.

Additionally, reference is made to **figure 2B****,** which shows a more detailed schematic of the sinking/sourcing node (25) and an adjacent node (20) located directly upstream relative to the sinking/sourcing node (25). The sinking/sourcing node and adjacent node may comprise a current sinking and/or sourcing device (30) configured for sinking or sourcing of the positioning current, a current sensing device (40) configured for sensing the positioning current, and a control unit (45).
As described above, responsive to the "Sinking or sourcing of the Positioning Current"-command, the control unit (45) of the sinking/sourcing node (25) may activate the current sinking and/or sourcing device (30) of the sinking/sourcing node (25), which will start sinking or sourcing the positioning current.
Similarly, responsive to the "Registration of the positioning current"-command, the control unit (45) of the adjacent node (20) may activate the current sensing device (40) of the adjacent node (20), which will start observing the presence (or absence) of the positioning current and subsequently report the observation to the control unit (45). The control unit may register the positive (or negative) observation and store said observation, for instance on a memory unit.

### Example 3

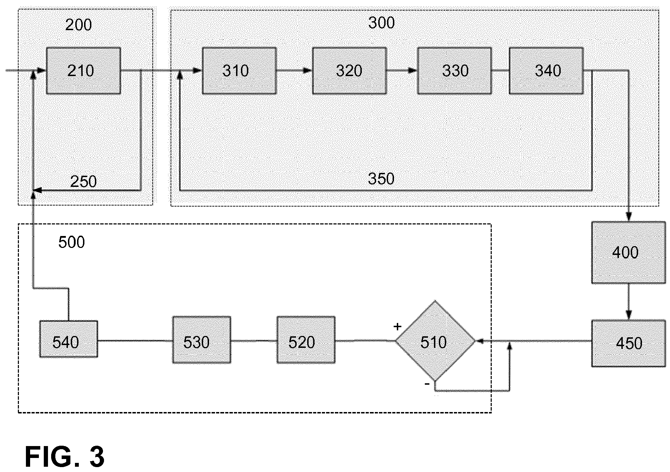

The present example provides a preferred embodiment of the method for determining the physical positions of nodes in the two-wire electrical system. Reference is made to **Figure 3****,** which shows an exemplary flowchart for performing the preferred method. The method may be performed by a system, such as the one described in previous examples.
In particular, the system may first initiate an ID search phase (200). During this phase at least one controller will search for and identify nodes (210) connected within the same electrical system. For each node having a unique ID, the controller will loop (250) the ID search phase (200) until all nodes are identified and unique IDs are acquired from and/or assigned to every node.
Optionally, the list of nodes may be compared by a provided list, which could allow for flagging defective nodes. After finishing the ID Search phase the controller will thus acquire a list of nodes present in the network and their corresponding unique IDs. For example, the system may discover 'x'-amount of nodes.
Next, the system may continue with a position discovery phase (300). In particular, the controller may perform the method for determining an electrical position according to one or more embodiments described herein.
The controller may commence by addressing a first node with a first "Unique Addressing Signal", which may be followed by a "Sinking or sourcing of the positioning current" command (310) instructing the first node to start sinking or sourcing the positioning current and become a sinking/sourcing node.
The system may continue by addressing a group of nodes with a second "Global Addressing Signal", which may be followed by a "Registration of the positioning current" command (320).
Optionally, the system may once again address the sinking/sourcing node with the "Unique Addressing Signal", which may be followed by a "Stop sinking or sourcing of the positioning current" command (330) instructing the first node to stop sinking or sourcing the positioning current.
Finally, the system may once again address the group of nodes, which may be a part or all of the nodes, with a second "Global Addressing Signal", which may be followed by a "Reporting of a positioning current" command (340).
For each node identified during the ID search phase (200), the controller may loop (350) the position discovery phase (300) until the electrical position of every node is identified. Based on the information received during the position discovery phase (300), the system may compile a table of electrical positions (400). In particular, the listed positions may be relative, for instance a list comprising the position of every node relative to every other node in relative terms such as downstream or upstream, and/or the listed positions may be absolute, for instance a list of physical positions of every node in the system in absolute terms such as distances.
For single string networks such as the ones illustrated in example 2, the compiling may simplify to ordering the list of nodes and their unique IDs according to the number of positioning currents they observed and did not observe. For instance, a node that observed all positioning currents may be assigned the first electrical position downstream, i.e. the beginning of the string closest to the controller; whereas another node that observed no or only its own positioning may be assigned the last electrical downstream position, i.e. the end of the string farthest away from to the controller.

The amount of electrical positions determined during the position discovery phase (300) will preferably correspond to 'x', which is the amount of nodes identified during the position ID search phase (200). After compiling the table of electrical positions for every node of the plurality of nodes, the system may go idle or enter a stand-by mode (450).
In a further embodiment of the present example the system may be configured for performing additional steps for updating and/or verifying (500) the electrical position of nodes present in or absent from the table of electrical positions.
The system may leave the stand-by mode (450) responsive to a trigger (510). The trigger may for instance be a maintenance trigger (e.g. started by a user such as a technician), but it may also be an automated trigger (e.g. automated detection of new nodes in the system, or newly connected nodes seeking connection to a controller).
Should the trigger be accepted (+), the system may start establishing communication with every nodes previously identified to verify whether they are still present and/or in the same positions as determined previously (520).
Any observed discrepancies (530) may be stored in an updated table of electrical positions. The system may be instructed to overwrite the previous table, or alternatively flag and signal all the discrepancies.
In the particular case of a missing node (e.g. absent, defective, removed, etc.), the system may identify the absence of said node, subsequently update the table of electrical positions and optionally flag the missing node as a defective node and report the defective node.
In the particular case of a replaced or rearranged node, the system may identify that the unique ID and/or electrical position corresponds with that of a previously identified node, subsequently update the table of electrical positions and optionally flag the node as a replaced or rearranged node.
In the particular case of a new node, the system may loop back (540) to the ID search phase (200), acquiring and/or assigning a unique ID for the new node and determining its electrical position.

## Claims

1. A method for determining the electrical positions of nodes (20) in a two-wire electrical system (100), the system (100) comprising at least one controller (10) connected to a plurality of nodes (20), every node (20) comprising a unique ID, the method comprising:
a) addressing a first node (20') with a unique addressing signal;
b) instructing the first node (20') to sink or source a positioning current - thus becoming a sinking/sourcing node (25);
c) addressing a group of nodes (20") with a global addressing signal;
d) instructing the group of nodes (20") to register the positioning current of the sinking/sourcing node (25);
e) optionally, instructing the sinking/sourcing node (25) to release the positioning current sinking or sourcing;
f) instructing the group of nodes (20") to report the registered positioning current;
g) determining the electrical position of the first node (20') relative to every node in the group of nodes (20");
h) optionally repeating steps a) to g) for one or more, and preferably every, node of the plurality of nodes (20); and,
i) compiling a table of electrical positions, preferably listing the relative and/or physical position of every node of the plurality of nodes (20).

2. The method according to claim 1, wherein every node (20) comprises a current sinking and/or sourcing device (30) configured for sinking or sourcing of the positioning current, preferably comprising a transistor; and wherein the current sinking or sourcing of step b) is performed by means of the current sinking or sourcing device (30) of the first node (20').

3. The method according to any one of claims 1 or 2, wherein every node (20) comprises a current sensing device (40) configured for sensing the positioning current of the sinking/sourcing node (25), preferably comprising a Hall sensor, a current transformer, and/or a pick-up coil; and wherein the registering of step d) is performed by means of the current sensing devices (40) of every node in the group of nodes (20").

4. The method according to any one of claims 1 to 3, wherein step a) is addressing unique multiple nodes with multiple unique addressing signals, such as a first node with a first unique addressing signal, a second node with a second unique addressing signal, a third node with a third unique addressing signal, and so on; and wherein step b) is instructing the multiple unique nodes with multiple unique addressing signals to sink or source a unique positioning current - thus becoming a first sinking/sourcing node, a second sinking/sourcing node, a third sinking/sourcing node, and so on.

5. The method according to any one of claims 1 to 4, wherein the positioning current is coded by means of variation in amplitude, and/or frequency, and/or analogue or digital coding; preferably resulting from a time interleave between the positioning and addressing current, and/or a current and/or voltage modulation corresponding for both the controller (10) and the plurality of nodes (20).

6. The method according to any one of claims 1 to 5, wherein the method further comprises the steps of:
x1) addressing and instructing a return signal to every node of the plurality of nodes (20);
x2) verifying the presence and unique ID of every node (20) in the table of electrical positions;
x3) identifying new and/or modified nodes;
x4) determining the electrical positions of the new and/or modified nodes according to the method of any one of claims 1 to 5;
X5) updating the table of electrical positions.

7. The method according to any one of claims 1 to 6, wherein the method further comprises the steps of:
y1) providing a list of installed nodes;
y2) comparing the list of installed nodes with the nodes in the table of electrical positions; and,
y3) determining any differences in the comparing of step (y2).

8. The method according to claim 7, wherein the steps of (y1) to (y3) are initiated whenever a node is added, removed (intermittence), replaced and/or rearranged; preferably automatically repeated.

9. The method according to any one of claims 7 or 8, wherein in case of a new node the method further comprises determining an electrical position of the new node; or wherein in case of a missing node the method further comprises flagging the missing node as a defective node; preferably reporting the missing node.

10. The method according to any one of claims 8 to 9, wherein the controller acquires and/or assigns a unique ID from every node; preferably by means of a binary search algorithm, a breadth-first search algorithm, a depth-first search algorithm, or a combination thereof.

11. A two-wire electrical system (100), the system comprising:
- at least one controller (10);
- a plurality of nodes (20) connected to the controller (10);
**characterised in that** each node comprises:
- a current sinking and/or sourcing device configured for sinking or sourcing of a positioning current; and,
- a current sensing device configured for observing the sinking or sourcing of the positioning current in nodes.

12. The system according to claim 11, wherein the current sinking and/or sourcing device comprises a device configured for creating a current flow through the node; preferably a transistor in the case of a sinking node and a power source and a transistor in the case of sourcing node.

13. The system according to any one of claim 11 or 12, wherein the current sensing device comprises a device configured for detecting the magnetic field generated by the positioning current; preferably a magnetic sensor, such as Hall sensor, and/or a current transformer, and/or a pick-up coil.

14. The system according to any one of claim 11 to 13, wherein the controller is configured for performing the method according to any one of claims 1 to 10.

15. A use of the system according to any one of claims 11 to 14 for performing the method according to any one of claims 1 to 10; preferably for mining, automotive, automation and machine construction; telecom; data collection.
